# EUROPÄISCHE PATENTSCHRIFT

(11) **EP 3 924 664 B1**
(45) Veröffentlichungstag und Bekanntmachung des Hinweises auf die Patenterteilung: **29.11.2023**
(21) Anmeldenummer: 20706403.1
(22) Anmeldetag: 10.02.2020
(51) Int. Cl.: F21S 8/04, F21V 17/16, F21V 8/00, F21V 19/00, F21Y 103/10, F21Y 115/10

(54) **ANORDNUNG ZUR LICHTABGABE MIT EINEM PLATTENFÖRMIGEN LICHTLEITELEMENT**
ARRANGEMENT FOR EMITTING LIGHT COMPRISING A PLANAR LIGHT-GUIDING ELEMENT
ARRANGEMENT D'ÉMISSION DE LUMIÈRE COMPRENANT UN ÉLÉMENT DE GUIDAGE DE LUMIÈRE EN FORME DE PLAQUE

(30) Priorität: 13.02.2019 DE 202019100804 U
(43) Veröffentlichungstag der Anmeldung: 22.12.2021
(73) Patentinhaber: Zumtobel Lighting GmbH, 6850 Dornbirn (AT)
(72) Erfinder: KOHLER, Christian, 6850 Dornbirn (AT); PIEPER, Stephan, 6850 Dornbirn (AT)
(74) Vertreter: Thun, Clemens
(86) Internationale Anmeldenummer: PCT/EP2020/053262
(87) Internationale Veröffentlichungsnummer: WO 2020/165071

(56) Entgegenhaltungen:
- EP-A1- 3 392 551
- WO-A1-2013/089027
- US-A1- 2008 117 577
- US-A1- 2014 002 767
- US-A1- 2016 139 330

## Beschreibung

Die vorliegende Erfindung betrifft eine Anordnung zur Lichtabgabe gemäß dem Oberbegriff des Anspruchs 1, welche ein plattenförmiges Lichtleitelement sowie zumindest eine längliche LED-Platine aufweist, die an einer Längsseite des Lichtleitelements angeordnet ist. Die erfindungsgemäße Anordnung kann hierbei als sog. Light Engine für eine Flächenleuchte verwendet werden.

Das Realisieren von Flächenleuchten, also von Leuchten, bei denen Licht über eine verhältnismäßig große Fläche möglichst homogen und gleichmäßig abgegeben wird, kann in unterschiedlicher Weise erfolgen.

Bei einer ersten Variante ist vorgesehen, dass die Lichtquellen flächig verteilt in einem Leuchtengehäuse angeordnet sind und das Licht über eine vor den Lichtquellen positionierte, lichtdurchlässige Abdeckung der Leuchte abgegeben wird. Da bei modernen Leuchten in der Regel LEDs als Leuchtmittel verwendet werden, ist in diesem Fall also vorgesehen, dass eine Vielzahl von LEDs matrixartig in dem Leuchtengehäuse angeordnet ist. Da verhindert werden soll, dass für einen Beobachter der Leuchte die LEDs als einzelne Lichtquellen erkennbar sind, müssen in diesem Fall dann entsprechende Maßnahmen getroffen werden, um das von den LEDs abgegebene Licht in geeigneter Weise zu beeinflussen. Bspw. ist hierbei die Abdeckung mit streuenden Strukturen versehen oder weist ein entsprechend streuendes Material bzw. eine davor angeordnete streuende Schicht oder Folie auf. Auch Reflektoren innerhalb des Leuchtengehäuses können zu einer Vergleichmäßigung der Lichtabgabe beitragen. Trotz allem ist bei dieser Variante ein gewisser Mindestabstand zwischen den LEDs und der Abdeckung, über die letztendlich das Licht abgegeben wird, erforderlich, sodass derartige Leuchten in der Regel eine gewisse Mindesthöhe aufweisen.

Ist eine flache Bauweise gewünscht, so ist es von Vorteil, auf plattenförmige Lichtleitelemente zurückzugreifen. Bei dieser Technologie entspricht die Lichtabstrahlrichtung der Leuchte nicht der Hauptabstrahlrichtung der einzelnen Leuchtmittel, also der LEDs, wie dies bei der oben beschriebenen Variante der Fall ist. Stattdessen sind LED-Platinen üblicherweise senkrecht zur Ebene der Lichtabgabe ausgerichtet. Die Platinen befinden sich dann am Außenumfang eines plattenförmigen Lichtleitelements, welches bspw. quadratisch oder rechteckig ausgeführt ist. Das von den LEDs emittierte Licht wird dann in das Lichtleitelement eingekoppelt und mittels Mehrfachreflexionen verteilt. Durch entsprechende Maßnahmen, über welche eine Lichtauskopplung der Lichtstrahlen erzielt wird, wird dann das Licht über eine Flachseite des Lichtleitelements, also senkrecht zur Lichtabgaberichtung der LED-Leuchtmittel abgegeben. Dabei kann die Lichtaustrittsseite des Lichtleitelements gleichzeitig auch das Licht-abgebende Element der Leuchte darstellen. Alternativ hierzu kann vor dem Lichtleitelement noch eine weitere Abdeckung vorgesehen sein. In jedem Fall wird bei dieser Variante allerdings eine deutlich flachere Bauform ermöglicht, da kein Mindestabstand zwischen den LED-Leuchtmitteln und der lichtdurchlässigen Abdeckung der Leuchte erforderlich ist. Das Lichtleitelement selbst sowie ggf. genutzte zusätzliche reflektierende Schichten oder dergleichen können mit einer Bauhöhe von lediglich wenigen mm realisiert werden.

Die zweite beschriebene Variante führt also zu gewissen Vorteilen hinsichtlich der Möglichkeiten zur Gestaltung einer Flächenleuchte. Allerdings ist bei dieser Technologie darauf zu achten, dass die LEDs in geeigneter Weise bzgl. des Lichtleitelements platziert werden. Nur bei einer effizienten Einkopplung des von den LEDs emittierten Lichts kann eine ausreichend hohe Effizienz erhalten werden, weshalb spezielle Lösungen erforderlich sind, mit deren Hilfe sichergestellt ist, dass eine dauerhaft korrekte Platzierung und Ausrichtung der LEDs im Hinblick auf die Lichteinkoppelfläche des Lichtleitelements gewährleistet ist. Dies führt in der Regel zu einem etwas komplexeren Aufbau der sog. Light Engine, also der Komponenten der Leuchte, die für die Lichterzeugung verantwortlich sind. Gleichzeitig ist ein entsprechend komplexerer Aufbau dann auch mit einer aufwendigeren Montage der Leuchte verbunden.

In diesem Zusammenhang beschreibt beispielsweise die EP 3 392 551 A1 eine Flächenleuchte mit einem Lichtleitelement, bei dem die Halterung einer LED-Platine im Randbereich des Lichtleitelements mit Hilfe eines länglichen Profilteils erfolgt.

Dieses wird auf den Randbereich des Lichtleitelements aufgeschoben und dort mit einer Federkralle fixiert. Zwar wird hierdurch eine zuverlässige Positionierung der LED-Lichtquelle ermöglicht, allerdings bringt die Federkralle den Nachteil mit sich, dass eine Demontage und Herausnahme des Lichtleitelements erschwert ist, da die Federkralle aufgrund ihrer Funktion die Oberfläche des Lichtleitelements zerkratzen wird. Ferner ist eine bauähnliche Displayeinheit aus WO 2013/089027 A1 bekannt.

Der vorliegenden Erfindung liegt deshalb die Aufgabenstellung zugrunde, eine Möglichkeit zur Realisierung einer Anordnung zur Lichtabgabe mit einem plattenförmigen Lichtleitelement zur Verfügung zu stellen, welche sich durch ihren einfachen Aufbau auszeichnet. Gleichzeitig soll allerdings eine korrekte Ausrichtung und Positionierung der Leuchtmittel im Hinblick auf das Lichtleitelement gewährleistet sein.

Die Aufgabe wird durch eine Anordnung zur Lichtabgabe, welche die Merkmale des Anspruchs 1 aufweist, gelöst. Vorteilhafte Weiterbildungen der Erfindung sind Gegenstand der abhängigen Ansprüche.

Die erfindungsgemäße Lösung beruht auf der Nutzung eines länglichen Profilelements, welches mehrere Funktionen gleichzeitig erfüllt. Zum einen dient das erfindungsgemäße Profilelement der Halterung einer LED-Platine. Zum anderen wird das Lichtleitelement mit Hilfe des Profilelements gelagert und ist mittels Federkraft an diesem befestigt, sodass eine korrekte Ausrichtung der LEDs in Hinblick auf das Lichtleitelement gewährleistet ist. Die Befestigung des Profilelements an dem Lichtleitelement erfolgt dabei mit Hilfe eines Spannelements, welches sich ausgehend von dem Profilelement zu einer gegenüberliegenden Seite des Lichtleitelements erstreckt. Das Spannelement ist dabei einerseits an dem Profilelement sowie andererseits an einem dem Profilelement gegenüberliegenden Bereich des Lichtleitelements fixiert.

Gemäß der vorliegenden Erfindung wird also eine Anordnung zur Lichtabgabe mit einem plattenförmigen Lichtleitelement sowie zumindest einer länglichen LED-Platine, welche an einer Längsseite des Lichtleitelements angeordnet ist, vorgeschlagen, wobei von LEDs der LED-Platine abgegebenes Licht in das Lichtleitelement eingekoppelt und über eine Flachseite des Lichtleitelements abgegeben wird. Erfindungsgemäß weist die Anordnung ferner ein längliches Profilelement zur Halterung der LED-Platine auf, wobei das Profilelement ferner auch der Lagerung eines Randbereichs des Lichtleitelements dient und mittels Federkraft an diesem befestigt ist, und wobei die Befestigung des Profilelements an dem Lichtleitelement mit Hilfe eines Spannelements erfolgt, welches sich von dem Profilelement zu einer gegenüberliegenden Seite des Lichtleitelements erstreckt und einerseits an dem Profilelement sowie andererseits an einem der Profilelement gegenüberliegenden Bereich des Lichtleitelements fixiert ist.

Dadurch, dass das Lichtleitelement und das Profilelement mittels Federkraft miteinander verbunden sind und ferner auch die LED-Platine durch das Profilelement gehalten wird, kann aus wenigen Einzelteilen eine Baueinheit gebildet werden, die alle wesentlichen für die Lichterzeugung und Lichtabgabe verantwortlichen Komponenten beinhaltet. Diese Baueinheit wiederum kann dann in einfacher Weise in das Gehäuse oder eine sonstige tragende Struktur einer Leuchte eingesetzt werden, sodass der Aufbau und der Zusammenbau einer entsprechenden Leuchte deutlich vereinfacht wird. Weiterhin ist mit Hilfe des erfindungsgemäßen Profilelements sichergestellt, dass die LEDs in geeigneter Weise im Hinblick auf den Lichteinkoppelbereich des Lichtleitelements angeordnet sind, sodass eine effiziente Nutzung des Lichts gewährleistet ist. Insgesamt kann also eine qualitativ hochwertige Lichtabgabe über eine größere Fläche hinweg erzielt werden, wobei durch die Befestigung des Profilelements mit Hilfe des Spannelements eine besonders einfache Montage und Halterung des Lichtleitelements ermöglicht wird.

Vorzugsweise kann vorgesehen sein, dass an der dem Profilelement gegenüberliegenden Seite des Lichtleitelements ein weiteres, baugleich ausgeführtes Profilelement angeordnet ist. Insbesondere kann dann auch dieses Profilelement eine längliche LED-Platine halten, sodass von zwei gegenüberliegenden Seiten her Licht in das Lichtleitelement eingekoppelt wird. Das erfindungsgemäße Konzept kann allerdings auch genutzt werden, wenn lediglich an einer Seite des Lichtleitelements eine Lichteinkopplung gewünscht ist. Entweder wird dann an der gegenüberliegenden Seite ein baugleiches Profilelement ohne LED-Platine verwendet oder das Spannelement ist derart ausgeführt, dass es in geeigneter Weise an dem gegenüberliegenden Rand des Lichtleitelements fixiert werden kann, beispielsweise dieses übergreift.

Vorzugsweise weisen das oder die Profilelemente geeignete Rastbereiche zum Einhängen des Spannelements auf. In diesem Fall kann insbesondere vorgesehen sein, dass diese Rastbereiche parallel verlaufende Rippen bzw. Nuten aufweisen, sodass das Einhängen des Spannelements in unterschiedlichen Positionen erfolgen kann. Hierdurch kann das erfindungsgemäße Konzept verhältnismäßig einfach variabel auf verschiedene Größen von Lichtleitelementen angepasst werden. In diesem Fall muss also nicht für jede einzelne Größe des Lichtleitelements ein geeignetes Spannelement zur Verfügung gestellt werden, sondern es ist ggf. die Nutzung einiger weniger Spannelemente mit entsprechenden verschiedenen Größen ausreichend.

Die zum Einsatz kommenden Spannelemente sind dabei ferner vorzugsweise derart ausgestaltet, dass sie das Lichtleitelement an einer Längsseite übergreifen. Hierdurch wird zusätzlich das Lichtleitelement entlang einer Richtung parallel zum Profilelement fixiert. Ferner trägt diese Maßnahme auch zu einer Stabilisierung des Lichtleitelements bei, sodass selbst bei Nutzung verhältnismäßig dünner Lichtleitelemente eine stabile Baueinheit erhalten wird.

Die Lagerung der LED-Platine an dem Profilelement erfolgt vorzugsweise mit Hilfe eines länglichen Kanals, in den die LED-Platine eingelegt bzw. eingeschoben werden kann. Dieser Kanal wird an einer Unterseite bzw. an einer ersten Längsseite durch das Profilelement begrenzt. An der gegenüberliegenden Längsseite hingegen ist vorzugsweise vorgesehen, dass ein auf das Profilelement aufsteckbares Profilteil, vorzugsweise in Form eines Kunststoffprofils, gegen die LED-Platine drückt und diese somit fixiert. Dieses Kunststoffprofil kann vorzugsweise reflektierend ausgeführt sein, insbesondere aus einem weißen Kunststoffmaterial bestehen. In diesem Fall übt das Profilteil zusätzlich auch eine optische Funktion aus, da es im unmittelbaren Lichteinkopplungsbereich des Lichtleitelements eine diffuse Reflexion auftreffender Lichtstrahlen bewirkt. Einerseits wird hierdurch wiederum die Effizienz der Lichteinkopplung erhöht, andererseits trägt diese Maßnahme zu einer zusätzlichen Vergleichmäßigung des Lichts bei.

Die Lagerung des Lichtleitelements mit Hilfe des erfindungsgemäßen Profilelements erfolgt vorzugsweise dadurch, dass dieses zunächst eine Auflage für eine Flachseite des Lichtleitelements bildet, insbesondere für die der Lichtabgabefläche des Lichtleitelements gegenüberliegende Rückseite. An der gegenüberliegenden Flachseite liegt zumindest im Randbereich des Lichtleitelements das Profilelement, vorzugsweise jedoch das bereits oben erwähnte Profilteil an. Damit wird das Lichtleitelement über seine Lichteinkoppelseite hinweg an beiden einander gegenüberliegenden Flachseiten abgestützt und somit zuverlässig gehalten.

Sowohl das Profilelement als auch das oben erwähnte Spannelement können ggf. zusätzlich auch als Trägerelement für ein Betriebsgerät zum Betreiben der Leuchtmittel verwendet werden. Hierfür kann bspw. die Rückseite desjenigen Bereichs des Profilelements, der auch der Lagerung des Lichtleitelements dient, verwendet werden. Dabei können insbesondere auch Maßnahmen wie z.B. Schraubkanäle oder dergleichen vorgesehen sein, durch die ein entsprechendes Fixieren des Betriebsgeräts ermöglicht wird.

Letztendlich tragen also alle beschriebenen Maßnahmen dazu bei, dass insgesamt eine aus nur wenigen Bauteilen bestehende, trotz allem jedoch äußerst effiziente Anordnung zur flächigen Lichtabgabe realisiert wird.

Nachfolgend soll die Erfindung anhand der beiliegenden Zeichnung näher erläutert werden. Es zeigen:
- Figur 1: ein Ausführungsbeispiel einer erfindungsgemäßen Anordnung zur Lichtabgabe in perspektivischer Ansicht;

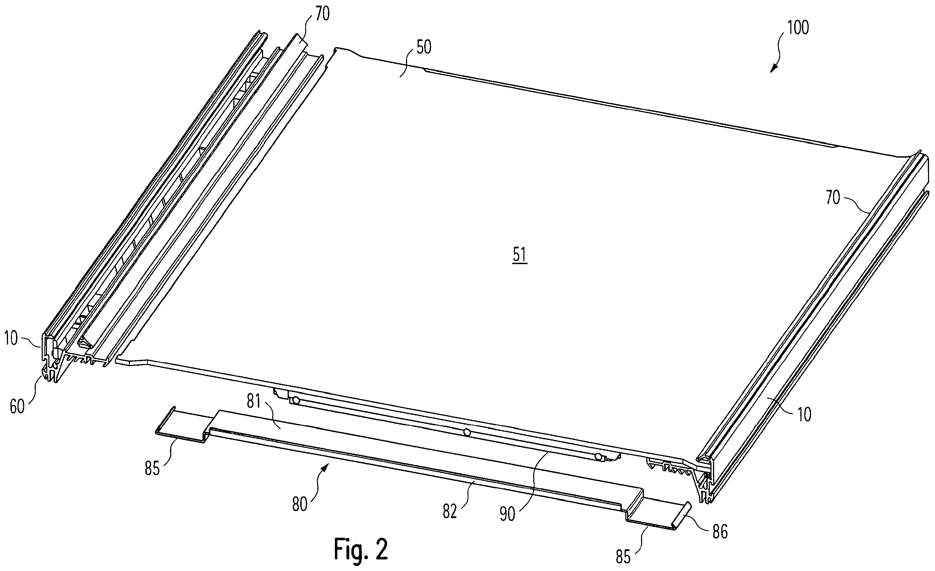

- Figur 2: die Anordnung zur Lichtabgabe von Figur 1 in teilweiser Explosionsdarstellung;
- Figur 3: eine seitliche Ansicht der erfindungsgemäßen Anordnung zur Lichtabgabe in Explosionsdarstellung;
- Figur 4: eine seitliche Ansicht der Anordnung zur Lichtabgabe im zusammengebauten Zustand;
- Figur 5: eine vergrößerte Darstellung des seitlichen Bereichs der erfindungsgemäßen Anordnung zur Lichtabgabe;
- Figur 6: eine perspektivische Ansicht eines Spannelements, welches bei der erfindungsgemäßen Anordnung zum Einsatz kommt;
- Figur 7: ein plattenförmiges Lichtleitelement, welches bei der erfindungsgemäßen Anordnung zum Einsatz kommt; und
- Figur 8: eine vergrößerte Darstellung eines Eckbereichs des Lichtleitelements von Figur 7.

Die in den Figuren dargestellte, mit dem Bezugszeichen 100 versehene erfindungsgemäße Anordnung zur Lichtabgabe kann als sog. Light Engine für eine quadratische Flächenleuchte verwendet werden. Im dargestellten Ausführungsbeispiel ist vorgesehen, dass von zwei einander gegenüberliegenden Seiten Licht in das flächige Lichtleitelement der Anordnung eingekoppelt wird. Wie zu einem späteren Zeitpunkt allerdings noch ausführlich erläutert wird, kann das erfindungsgemäße Konzept in verschiedener Weise variiert werden, insbesondere abhängig davon, an wie vielen Seiten des Lichtleitelements eine Lichteinkopplung gewünscht ist. Auch die Form des Lichtleitelements kann verändert werden, sodass Flächenleuchten in unterschiedlichen Abmessungen realisiert werden können.

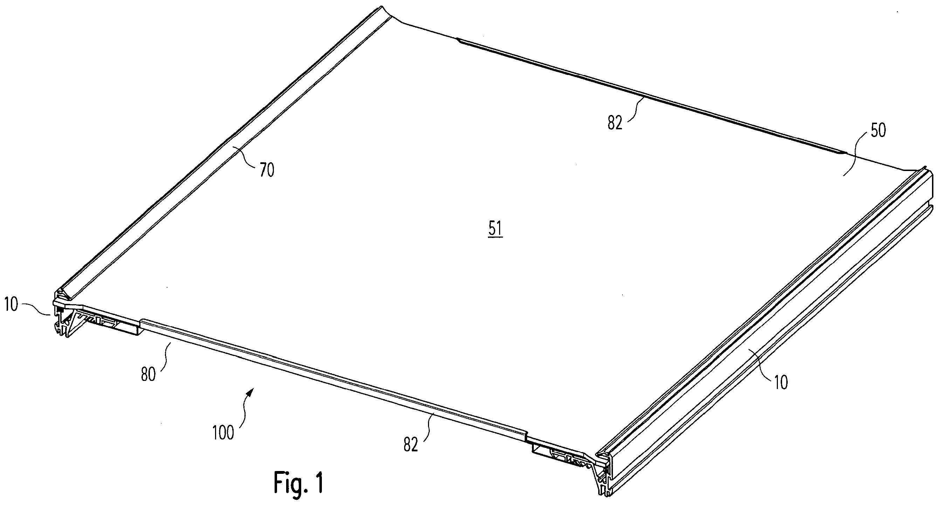

Zentraler Bestandteil der erfindungsgemäßen Anordnung 100 ist also zunächst ein flächiges Lichtleitelement 50, in das in bekannter Weise seitlich Licht eingekoppelt werden soll. Dieses wird durch Mehrfach-Reflexionen über die gesamte Breite des Lichtleitelements 50 hinweg verteilt und dann über eine Flachseite, in der Darstellung in Figur 1 über die obere Flachseite 51 des Lichtleitelements 50 abgegeben. Das Verteilen des Lichts mithilfe von Mehrfach-Reflexionen sowie das möglichst gleichmäßige Auskoppeln des Lichts über die Flachseite 51 ist dabei grundsätzlich aus dem Stand der Technik bekannt und kann durch entsprechende reflektierende Beschichtungen und geeignete Auskoppelstrukturen unterstützt werden. Diese sollen im Folgenden allerdings nicht im Detail beschrieben werden, da sie für die Erfindung nicht von zentraler Bedeutung sind.

Stattdessen befasst sich die vorliegende Erfindung in erster Linie mit der Frage, in welcher Weise eine einfache aber zuverlässige geeignete Anordnung der LEDs bezüglich der Lichteinkoppelflächen des Lichtleitelements 50 erzielt werden kann. Die Lichteinkopplung soll in bekannter Weise über schmale Umfangsflächen des Lichtleitelements 50 erfolgen, sodass es erforderlich ist, die hierzu verwendeten LEDs in entsprechender Weise zu positionieren und auszurichten.

Erfindungsgemäß ist vorgesehen, dass das entsprechende Anordnen der LED-Leuchtmittel in Bezug auf das Lichtleitelement 50 mithilfe von Profilelementen 10 erfolgt, wobei bei dem Ausführungsbeispiel der Figuren an zwei einander gegenüberliegenden Seiten des Lichtleitelements 50 derartige Profilelemente 10 vorgesehen sind. Im dargestellten Ausführungsbeispiel tragen diese Profilelemente 10 jeweils entsprechend geeignete LED-Leuchtmittel, sodass also von den jeweiligen Seiten her Licht in das Lichtleitelement eingekoppelt wird.

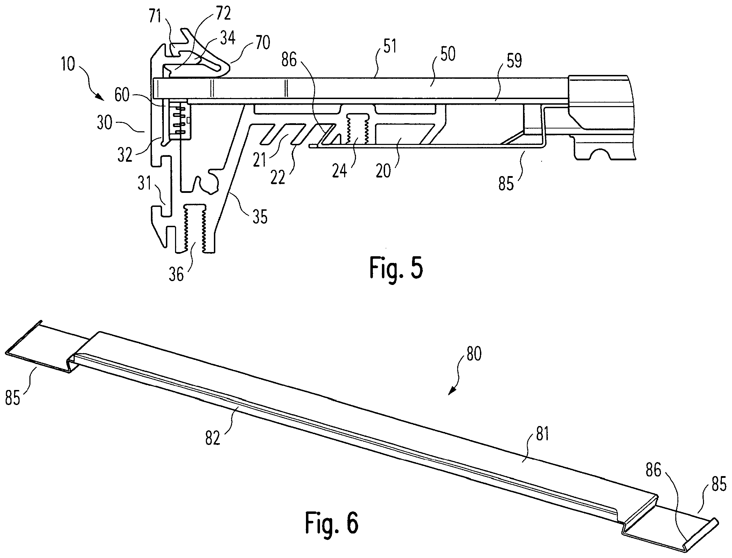

Die Ausgestaltung des erfindungsgemäßen Profilelements 10 kann insbesondere der vergrößerten Schnittdarstellung von Figur 5 entnommen werden. Das Profilelement 10 ist hierbei vorzugsweise als Strangpressprofil ausgebildet und kann dementsprechend in einfacher Weise in gewünschter Länge realisiert werden bzw. auf eine gewünschte Länge abgeschnitten werden. Die Länge des Profilelements 10 sollte dabei in etwa der entsprechenden Länge der Seitenwand des Lichtleitelements 50 entsprechen.

Insgesamt weist das Profilelement 10 eine abgewinkelte Konfiguration auf mit einem ersten Steg 20 sowie einem sich im Wesentlichen senkrecht hierzu erstreckenden zweiten Steg 30. Wie nachfolgend noch näher erläutert wird, dient der Steg 20 als rückseitige Auflage für das Lichtleitelement 50, wobei an dessen Rückseite gegebenenfalls auch ein dünner Reflektor 59 vorgesehen sein kann, wie dies in Figur 5 dargestellt ist. Der zweite Steg 30 ist dabei über einen schräg nach unten verlaufenden Verbindungssteg 35 mit dem Steg 20 verbunden, der sich vom äußeren Ende des Stegs 20 zunächst nach unten erstreckt und hier in den unteren Endbereich des Stegs 30 übergeht. In diesem Übergangsbereich zwischen dem Verbindungssteg 35 und dem Steg 30 kann dann wie dargestellt ein länglicher Kanal mit einem Innengewinde 36 vorgesehen sein, über den beispielsweise eine Schraubbefestigung der Anordnung 100 an einem Leuchtengehäuse oder einem anderen nicht dargestellten Trägerelement einer Leuchte erfolgt. Auch andere Möglichkeiten der Befestigung der Anordnung 100 an einem Leuchtengehäuse wären denkbar. Beispielsweise könnte die ebenfalls in Figur 5 erkennbare, nach außen gerichtete Längsnut 31 des Stegs 30 zur Verrastung mit entsprechend geeigneten Rastmitteln eines Leuchtengehäuses genutzt werden.

Wesentlich ist, dass der Steg 30 zunächst einer geeigneten Halterung bzw. Lagerung der LED-Platine 60 dient. Hierzu ist der Steg 30 derart profiliert ausgebildet, dass in seinem oberen Bereich ein nach innen gerichteter Aufnahmekanal 32 gebildet ist, in den die Platine 60 eingelegt bzw. eingeschoben wird. Der Aufnahmekanal 32 ist hierbei durch die entsprechende Gestaltung des Stegs 30 an seiner Unterseite derart ausgebildet, dass die Platine 60 entsprechend geführt ist und somit nicht aus dem Kanal 32 herauskippen kann. An seiner Oberseite wird der Kanal 32 durch einen nach innen ragenden Steg 34 begrenzt. Hier ist vorgesehen, dass auf diesen Steg 34 ein längliches Profilteil 70 aufgeschoben bzw. aufgesteckt wird. Dieses u-förmige Profilteil 70 verrastet hierbei über einen entsprechenden Vorsprung 71 mit dem Profilelement 10, gleichzeitig gelangt es mit einem unteren Endbereich 72 in Anlage gegen den oberen Rand der LED-Platine 60, sodass diese in der Aufnahme 32 des Profilelements 10 fixiert ist. Hierdurch wird die Platine 60 insgesamt ausreichend zuverlässig in der gewünschten Position gehalten.

Das Profilteil 70 ist vorzugsweise aus Kunststoff gebildet, wobei insbesondere ein weißer Kunststoff verwendet wird, der diffus reflektierend wirkt. Wie nachfolgend noch erläutert wird, kann hierdurch das Profilteil 70 auch eine optische Funktion erfüllen und insbesondere die Einkopplung des Lichts in das Lichtleichtelement 50 verbessern.

Das Lichtleitelement 50 selbst wird dann in seinem Randbereich, in dem die Lichteinkopplung erfolgen soll, durch das Profilelement 10 entsprechend geführt. Einerseits erfolgt dies dadurch, dass der erste Steg 20 des Profilelements 10 an der Rückseite des Lichtleitelements 50 bzw. des sich an der Rückseite des Lichtleitelements 50 befindenden Reflektors 59 an- bzw. aufliegt. Hierdurch wird also das Lichtleitelement 50 bzw. die Sandwich-Anordnung gebildet aus Lichtleitelement 50 und Reflektor 59 durch das Profilelement 10 abgestützt. Gleichzeitig erstreckt sich das Lichtleitelement 50 bis zu dem vertikalen Steg 30 das Profilelements 10, wobei die Ausgestaltung derart ist, dass das aufgesteckte Profilteil 70 im Randbereich auf die der Rückseite gegenüberliegende Oberfläche 51 des Lichtleitelements 50 drückt. Gegebenenfalls kann hier eine leichte Klemmung vorliegen, sodass also das mit der LED-Platine 60 und dem Profilteil 70 bestückte Profilelement 10 auf den entsprechenden Randbereich des Lichtleitelements 50 aufgeschoben wird und dort leicht klemmend gehalten wird. Die eigentliche Befestigung des Profilelements 10 an dem Lichtleitelement 50 erfolgt dann mit Hilfe der später noch näher beschriebenen Spannelemente.

In dieser Situation ist es von Vorteil, wenn das Profilteil 70 wie bereits erwähnt aus einem weißen Kunststoff besteht. Dieses übergreift nämlich den Randbereich des Lichtleitelements 50 und wirkt hier für auftreffende Lichtstrahlen diffus reflektierend. Damit wird eine zusätzliche Vergleichmäßigung des in das Lichtleitelements 50 eingekoppelten Lichts erzielt. Einerseits wird hierdurch die Gefahr reduziert, dass die LEDs zu einzelnen lokalen erhöhten Helligkeiten aus Blickrichtung eines Beobachters führen, andererseits können ggf. geringfügige Unterschiede in der Farbe bzw. der Farbtemperatur das von den LEDs abgegebenen Lichts ausgeglichen werden.

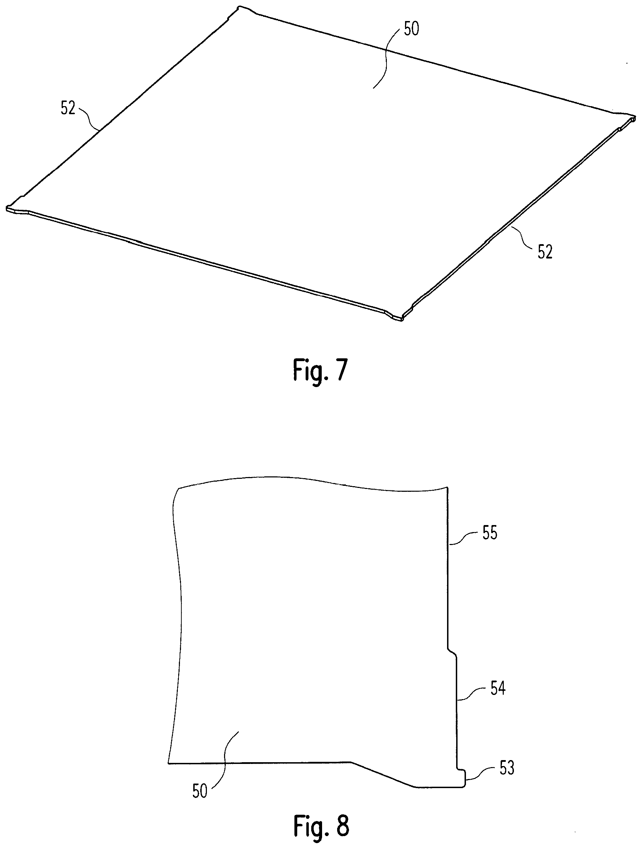

Die Ausgestaltung des Lichtleitelements 50 in dessen Randbereich ist hierbei derart, dass die LEDs in optimaler Weise bezüglich der Lichteinkoppelfläche des Lichtleitelements 50 positioniert werden. Dies soll nachfolgend näher anhand der Figuren 7 und 8 erläutert werden.

Wie nämlich die Darstellungen zeigen, ist das Lichtleitelement 50 insbesondere in seinen Eckbereichen, die vergrößert in Figur 8 gezeigt sind, mehrfach abgestuft ausgebildet. Zwei seitliche Endbereiche 53 des Lichtleitelements 50 sind hierbei zunächst derart vorstehend ausgeführt, dass sie in einem an dem Profilelement 10 angeordneten Zustand dieses entsprechend leicht kürzer bemessene Profilelement 10 an beiden Stirnseiten übergreifen. Das Profilelement 10 kann somit entlang der Lichteinkoppelseite 52 des Lichtleitelements 50 nicht gegenüber diesem verschoben werden, so dass in dieser Richtung eine feste Zuordnung vorliegt.

Der sich an den Endbereich 53 anschließende Anlagebereich 54 ist dazu vorgesehen, mit seiner Außenseite an dem Profilelement 10 im Bereich des Aufnahmekanals 32 anzuliegen. Dies hat zur Folge, dass der sich an den Anlagebereich 54 anschließende, wiederum leicht zurück versetzt ausgeführte Bereich 55 einen definierten Abstand zur Innenseite des Aufnahmekanals 32 des Profilelements 10 aufweist. Es ist dieser abgestufte zentrale Bereich 55, über dessen Länge hinweg die Leuchtmittel, also die LED-Platinen angeordnet sind, wobei die Abstufung zur Folge hat, dass dieser Bereich 55, der die eigentliche Lichteinkoppelfläche des Lichtleitelements 50 bildet, einen vorgegebenen Abstand zu der LED-Platine 60 aufweist. Dies ist erforderlich, um eine optimale Lichteinkopplung in das Lichtleitelement 50 zu gewährleisten. Die besondere Gestaltung des Lichtleitelements 50 trägt also zu einer Verbesserung der Lichteinkopplung bei.

Die eigentliche Befestigung zwischen Profilelement 10 und Lichtleitelement 50 erfolgt dann nicht durch die oben beschriebene, bevorzugt vorgesehene Klemmwirkung zwischen Profilelement 10 und Lichtleitelement 50, sondern mithilfe von Spannelementen 80, wobei eines hiervon isoliert in Figur 6 gezeigt ist.

Die Spannelemente 80 sind wie dargestellt etwa brückenartig ausgebildet mit einem zentralen länglichen Anlagebereich 81 sowie zwei an beiden Enden des zentralen Analgebereichs 81 vorgesehenen Befestigungsfedern 85. Der z-förmige Übergang zwischen Anlagebereich 81 und Befestigungsfedern 85 führt hierbei dazu, dass der Anlagebereich 81 erhöht positioniert ist. Die Federn 85 wiederum weisen an ihren Enden dann Umbiegungen 86 auf, die ein Einhängen bzw. Verspannen mit den an den beiden gegenüberliegenden Seiten des Lichtleitelements 50 angeordneten Profilelementen 10 ermöglichen.

Diese Umbiegungen 86 können hierbei in entsprechende Längskanäle 21 eingehängt werden, die an der dem Lichtleitelement 50 gegenüberliegenden Seite des Stegs 20 ausgebildet sind. Die Kanäle 21 werden durch entsprechend nach außen geneigte Stege 22 gebildet, sodass die Umbiegungen 86 in geeigneter Weise eingehängt werden können und ein selbstständiges Lösen verhindert wird.

Die Abmessungen der Spannelemente 80 sind dabei derart bemessen, dass bei entsprechendem Einhängen an den zwei einander gegenüberliegenden Profilelementen 10 die Spannelemente 80 entsprechend unter Spannung stehen und damit die Profilelemente 10 aufeinander zuziehen, sodass eine entsprechend stabile Verankerung zwischen Lichtleitelement 50 und Profilelementen 10 erzielt wird.

Dabei ist wie bereits erwähnt vorzugsweise vorgesehen, dass mehrere parallel zueinander verlaufende Kanäle 21 zum Einhängen der Spannelemente 80 zur Verfügung stehen. Somit ist gewährleistet, dass entsprechende Toleranzen bei den Abmessungen des Lichtleitelements 50 aufgefangen werden können. Auch eröffnen die mehreren Positionen zum Einhängen des Spannelements 80 die Möglichkeit, bei Nutzung eines Spannelements 80 einer bestimmten Größe trotz allem verschieden große Lichtleitelemente zu verwenden.

Die Spannelemente 80 sind vorzugsweise einstückig ausgeführt und bestehen aus einem entsprechend geeigneten, leicht flexiblen Material. Wie hierbei Figur 6 ferner zeigt, weist der zentrale Auflagebereich 81, der im montierten Zustand des Spannelements 80 im Bereich der nicht zur Lichteinkopplung genutzten Seite wiederum an der Rückseite des Lichtleitelements 50 bzw. des Reflektors 59 anliegt, einen seitlichen Steg 82 auf. Dieser übergreift den entsprechenden Randbereich des Lichtleitelements 50, sodass dieses auch an diesen Längsseiten entsprechend stabilisiert und das Spannelement 80 im Randbereich des Lichtleitelements 50 entsprechend fixiert ist. Insgesamt wird also das Lichtleitelement 50 an allen vier Seiten abgestützt, einerseits an den beiden Seiten, an denen sich die Profilelemente 10 befinden, sowie andererseits an den beiden weiteren Längsseiten über die Spannelemente 80. Insgesamt ergibt sich hierdurch auch bei einem sehr dünnen und damit für sich allein genommen eher unstabilen Lichtleitelement 50 eine ausreichend stabile Konfiguration, sodass die in Figur 1 dargestellte hierdurch erhaltene Baueinheit dann in einfacher Weise weiterverarbeitet, insbesondere in das Gehäuse einer Leuchte eingesetzt werden kann.

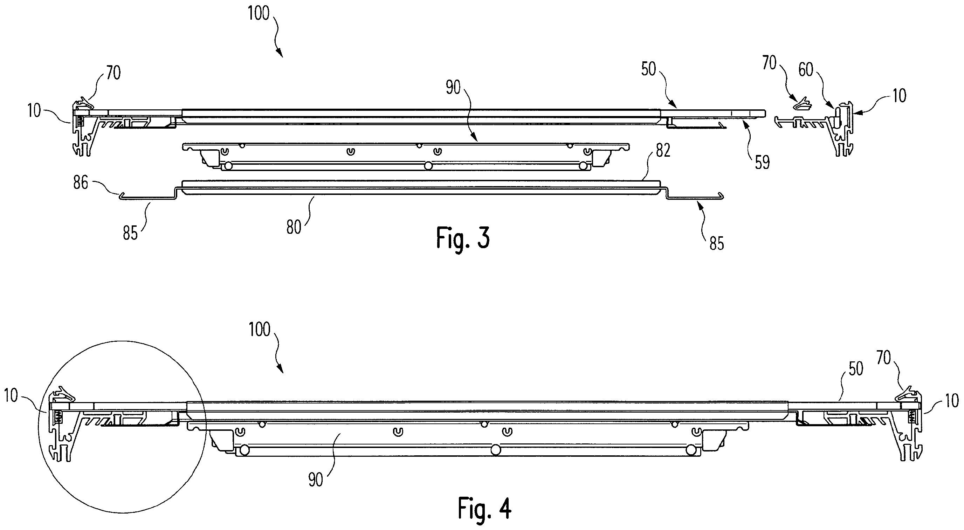

Sowohl die Profilelemente 10 als auch die Spannelemente 80 können dabei zusätzlich auch zur Lagerung eines Betriebsgeräts 90 genutzt werden. Einerseits könnte beispielsweise hierfür der Steg 20 des Profilelements 10 genutzt werden, wobei dieser entsprechend der Darstellung dann bevorzugt einen entsprechenden in Längsrichtung verlaufenden Schraubkanal 24 aufweist. Allerdings wäre es auch möglich, entsprechend der seitlichen Ansicht der Figuren 3 und 4 ein Betriebsgerät 90 an der Rückseite des Spannelements 80 anzuordnen. Dieses müsste dann in entsprechender Weise Befestigungsmöglichkeiten für das Betriebsgerät aufweisen. Ein entsprechendes Verklemmen und/oder Einschnappen bzw. ein Verschrauben wäre hierbei denkbar.

Insgesamt ist also erkennbar, dass aufgrund der speziellen Ausgestaltung der verschiedenen Komponenten die erfindungsgemäße Anordnung zur Lichtabgabe in einfacher Weise zusammengesetzt und dann als Baueinheit weiter genutzt werden kann. Besondere Vorteile bestehen hierbei darin, dass die Profilelemente in einfacher Weise an beliebige Abmessungen eines entsprechenden Lichtleitelements angepasst werden können bzw. mithilfe eines einzigen oder zumindest nur weniger Spannelemente unterschiedlicher Längen verschiedenste Abmessungen von Lichtleitelementen fixiert werden können. Stehen beispielsweise mehrere unterschiedlich lange Spannelemente zur Verfügung, so können trotz allem die gleichen seitlichen Profilelemente verwendet werden, um unterschiedlich große Leuchtenelemente mit einer flächigen Lichtabgabe zu ermöglichen.

Nachfolgend sollen noch denkbare Varianten des erfindungsgemäßen Konzepts erläutert werden.

So ist abhängig von der Ausgestaltung des Lichtleitelements nicht zwingend erforderlich, dass von beiden Seiten her Licht in dieses eingekoppelt wird. Wäre beispielsweise lediglich eine einseitige Lichteinkopplung erforderlich, so könnte selbstverständlich auch an der gegenüberliegenden Seite auf die in dem Kanal 32 des Profilelements 10 aufgenommenen LED-Leuchtmittel verzichtet werden. In diesem Fall ergibt sich wiederum eine Anordnung 100, wie sie in Figur 1 dargestellt ist. Der einzige Unterschied besteht darin, dass eines der beiden Profilelemente 10 nicht mit LED-Leuchtmitteln bestückt ist.

Im Falle einer einseitigen Lichteinkopplung wäre es allerdings auch ausreichend, das erfindungsgemäße Profilelement 10 lediglich an der für die Lichteinkopplung gewünschten Seite des Lichtleitelements 50 anzuordnen. Die Spannelemente 80 könnten dann gegebenenfalls an der dem Profilelement 10 gegenüberliegenden Seite leicht modifiziert ausgeführt sein, derart, dass sie nicht mit einem dort befindlichen Profilelement verrastet werden, sondern die entsprechend gegenüberliegende Seite des Lichtleitelements übergreifen und hier verankert werden. Wiederum wird das Profilelement 10 dann unter Zug stehend auf die entsprechende Lichteinkoppelseite des Lichtleitelements 50 gezogen und dort derart fixiert, dass eine optimale Lichteinkopplung erfolgen kann. In diesem Fall wäre es ferner von Vorteil, wenn die der Lichteinkoppelseite gegenüberliegende Längsseite des Lichtleitelements verspiegelt bzw. mit einem entsprechenden Reflektor versehen ist, um einen ungewünschten Lichtaustritt an dieser Seite zu verhindern. Ferner könnte in diesem Fall auf die abgestufte Ausgestaltung des Randbereichs des Lichtleitelements 50 verzichtet werden, wobei allerdings zumindest die überstehenden Endbereiche 53 weiterhin genutzt werden könnten, um die seitliche Bewegung der Spannelemente 80 zu begrenzen.

Schließlich wäre es auch denkbar, entsprechende Profilelemente an allen vier Seiten eines Lichtleitelements anzuordnen. In diesem Fall kann sogar eine Lichteinkopplung von allen vier Seiten her erfolgen, wenn eine besonders hohe Lichtmenge erzeugt und abgegeben werden soll. Die Profilelemente sollten dann an ihren Endbereichen entsprechend auf Gehrung geschnitten sein, sodass das Lichtleitelement ohne Spalte bzw. Lücken entsprechend umrahmt werden kann. Auch ein entsprechendes modifizieren der Spannelemente wäre dann von Vorteil, um sicherzustellen, dass jeweils zwei einander gegenüberliegende Profilelemente miteinander verspannt werden können. Alternativ oder ergänzend hierzu wäre auch denkbar, alle vier Profilelemente über Eck-Verbindungselemente miteinander zu verbinden. Diese Eck-Verbindungselemente könnten dann zum Beispiel in den Kanal 31 der Profilelemente gesteckt sein. Auch wäre es möglich, diese Eck-Verbindungselemente über den Schraubkanal 24 mit den Profilelementen zu verbinden.

Insbesondere für den Fall, dass eine Lichteinkopplung an mehreren Seiten des Lichtleitelements erfolgt, kann vorgesehen sein, die erfindungsgemäße Anordnung derart auszugestalten, dass eine farbveränderliche Lichtabgabe ermöglicht wird. In diesem Fall können sich die in den Profilelementen 10 aufgenommenen LED-Leuchtmittel in ihrer Farbe oder Farbtemperatur unterscheiden, wobei dann vorzugsweise die Möglichkeit besteht, die verschiedenen LED-Leuchtmittel voneinander getrennt anzusteuern bzw. zu dimmen. Denkbar wären z.B. Kombinationen von weiß-grün, weiß-rot oder kaltweiß-warmweiß, wobei dann durch entsprechendes Einstellen der Intensitäten der verschiedenen Farben bzw. Farbtemperaturen das insgesamt abgegebene Licht in einer gewünschten Mischfarbe bzw. mittleren Farbtemperatur eingestellt werden kann. Auch wäre es denkbar, dass die einzelnen LEDs auf einer LED-Platine 60 zumindest zwei unterschiedliche Farben oder Farbtemperaturen aufweisen.

Bezüglich der Spannelemente ist ferner noch darauf hinzuweisen, dass nicht zwingend erforderlich ist, dass diese einstückig aus einem entsprechend qualitativ hochwertigen und damit flexiblen Material ausgeführt sind. Auch eine mehrteilige Ausführungsform wäre denkbar, bei der der zentrale Anlagebereich 81 aus einem unflexiblen Blechmaterial besteht und lediglich die Spannfedern 85 aus einem entsprechend höherwertigem, flexiblen Material bestehen. Der Aufwand zur Herstellung der Spannelemente wird in diesem Fall dann etwas erhöht, allerdings wird der Vorteil etwas geringerer Materialkosten erhalten.

## Patentansprüche

1. Anordnung zur Lichtabgabe (100) mit einem plattenförmigen Lichtleitelement (50) sowie zumindest einer länglichen LED-Platine (60), welche an einer Längsseite (52) des Lichtleitelements (50) angeordnet ist, wobei von LEDs der LED-Platine (60) abgegebenes Licht in das Lichtleitelement (50) eingekoppelt und über eine Flachseite (51) des Lichtleitelements (50) abgegeben wird,
und wobei die Anordnung (100) ein längliches Profilelement (10) zur Lagerung der LED-Platine (60) aufweist, wobei das Profilelement (10) ferner auch der Lagerung eines Randbereichs des Lichtleitelements (50) dient und mittels Federkraft an diesem befestigt ist,
**dadurch gekennzeichnet,**
**dass** die Befestigung des Profilelements (10) an dem Lichtleitelement (50) mit Hilfe eines Spannelements (80) erfolgt, welches sich von dem Profilelement (10) zu einer gegenüberliegenden Seite des Lichtleitelements (50) erstreckt und einerseits an dem Profilelement (10) sowie andererseits an einem der Profilelement (10) gegenüberliegenden Bereich des Lichtleitelements (50) fixiert ist.

2. Anordnung zur Lichtabgabe nach Anspruch 1,
**dadurch gekennzeichnet,**
**dass** das Profilelement (10) Rastbereiche (21) zum Einhängen des Spannelements (80) aufweist.

3. Anordnung zur Lichtabgabe nach Anspruch 2,
**dadurch gekennzeichnet,**
**dass** die Rastbereiche (21) in Form von Nuten ausgebildet sind, wobei vorzugsweise mehrere parallel zueinander verlaufende Nuten vorhanden sind.

4. Anordnung zur Lichtabgabe nach einem der Ansprüche 1 bis 3,
**dadurch gekennzeichnet,**
**dass** an der dem Profilelement (10) gegenüberliegenden Seite des Lichtleitelements (50) ein weiteres Profilelement (10) angeordnet ist, welches baugleich ausgebildet ist.

5. Anordnung zur Lichtabgabe nach einem der Ansprüche 1 bis 3,
**dadurch gekennzeichnet,**
**dass** das Spannelement (80) das Lichtleitelement (50) an der dem Profilelement (10) gegenüberliegenden Seite übergreift, wobei vorzugsweise die entsprechende Seitenfläche des Lichtleitelements (50) verspiegelt ausgeführt ist.

6. Anordnung zur Lichtabgabe nach einem der Ansprüche 1 bis 5,
**dadurch gekennzeichnet,**
**dass** das Spannelement (80) einen Auflagebereich (81) für einen nicht zur Lichteinkopplung genutzten Randbereich des Lichtleitelements (50) aufweist.

7. Anordnung zur Lichtabgabe nach Anspruch 6,
**dadurch gekennzeichnet,**
**dass** das Spannelement (80) den Randbereich des Lichtleitelements (50) mit einem an dem Auflagebereich (81) angrenzenden Steg (82) übergreift.

8. Anordnung zur Lichtabgabe nach einem der vorherigen Ansprüche,
**dadurch gekennzeichnet,**
**dass** das Profilelement (10) einen länglichen Kanal (32) zur Aufnahme der LED-Platine (60) bildet.

9. Anordnung zur Lichtabgabe nach Anspruch 8,
**dadurch gekennzeichnet,**
**dass** der Kanal (32) an einer ersten Längsseite durch das Profilelement (10) begrenzt wird und an einer der ersten Längsseite gegenüberliegenden Längsseite durch ein auf das Profilelement (10) aufsteckbares Profilteil (70) begrenzt wird.

10. Anordnung zur Lichtabgabe nach Anspruch 9,
**dadurch gekennzeichnet,**
**dass** es sich bei dem Profilteil um ein Kunststoffprofil handelt, welches vorzugsweise aus weißem Kunststoff besteht.

11. Anordnung zur Lichtabgabe nach Anspruch 9 oder 10,
**dadurch gekennzeichnet,**
**dass** das Profilelement (10) eine Auflage für eine erste Flachseite des Lichtleitelements (50) bildet und das Profilteil (70) an der gegenüberliegenden Flachseite auf das Lichtleitelement (50) drückt.

12. Anordnung zur Lichtabgabe nach einem der vorherigen Ansprüche,
**dadurch gekennzeichnet,**
**dass** das Lichtleitelement (50) in einem mit dem Profilelement (10) verbundenen Zustand dieses an seinen Enden übergreift.

13. Anordnung zur Lichtabgabe nach einem der vorherigen Ansprüche,
**dadurch gekennzeichnet,**
**dass** das Lichtleitelement (50) derart mit Anlagebereichen (54) an dem Profilelement (10) anliegt, dass ein Lichteinkoppelbereich (55) des Lichtleitelements (50) einen definierten Abstand zu der von dem Profilelement (10) gehaltenen LED-Platine (60) aufweist.

14. Leuchte mit einer Anordnung zur Lichtabgabe (100) nach einem der vorherigen Ansprüche.

## Claims

1. An arrangement for light emission (100), comprising a planar light guide element (50) and at least one elongate LED circuit board (60) which is arranged on a longitudinal side (52) of the light guide element (50), light emitted by LEDs of the LED circuit board (60) being coupled into the light guide element (50) and being emitted via a flat side (51) of the light guide element (50),
and the arrangement (100) having an elongate profile element (10) for mounting the LED circuit board (60), the profile element (10) also being used to mount an edge region of the light guide element (50) and being fastened thereto by means of a spring force,
**characterized in that**
the profile element (10) is fastened to the light guide element (50) by means of a clamping element (80) which extends from the profile element (10) to an opposite side of the light guide element (50) and is fixed on one side to the profile element (10) and on the other side to a region of the light guide element (50) that is opposite the profile element (10).

2. The arrangement for light emission according to claim 1,
**characterized in that**
the profile element (10) has latching regions (21) for suspending the clamping element (80).

3. The arrangement for light emission according to claim 2,
**characterized in that**
the latching regions (21) are designed in the form of grooves, a plurality of grooves extending in parallel with one another preferably being present.

4. The arrangement for light emission according to any of claims 1 to 3,
**characterized in that**
a further profile element (10) is arranged on the side of the light guide element (50) opposite the profile element (10), which further profile element is identical.

5. The arrangement for light emission according to any of claims 1 to 3,
**characterized in that**
the clamping element (80) engages over the light guide element (50) on the side opposite the profile element (10), the corresponding lateral surface of the light guide element (50) preferably being reflective.

6. The arrangement for light emission according to any of claims 1 to 5,
**characterized in that**
the clamping element (80) has a support region (81) for an edge region of the light guide element (50) that is not used for light coupling.

7. The arrangement for light emission according to claim 6,
**characterized in that**
the clamping element (80) engages over the edge region of the light guide element (50) with a projection (82) adjoining the support region (81).

8. The arrangement for light emission according to any of the preceding claims,
**characterized in that**
the profile element (10) forms an elongate channel (32) for receiving the LED circuit board (60).

9. The arrangement for light emission according to claim 8,
**characterized in that**
the channel (32) is delimited on a first longitudinal side by the profile element (10) and is delimited on a longitudinal side opposite the first longitudinal side by a profile part (70) which can be attached to the profile element (10).

10. The arrangement for light emission according to claim 9,
**characterized in that**
the profile part is a plastics profile which preferably consists of white plastics material.

11. The arrangement for light emission according to claim 9 or 10,
**characterized in that**
the profile element (10) forms a support for a first flat side of the light guide element (50), and the profile part (70) presses on the light guide element (50) on the opposite flat side.

12. The arrangement for light emission according to any of the preceding claims,
**characterized in that**
the light guide element (50), in a state in which it is connected to the profile element (10), engages over the profile element at the ends thereof.

13. The arrangement for light emission according to any of the preceding claims,
**characterized in that**
the light guide element (50) rests on the profile element (10) with contact regions (54) in such a way that a light coupling region (55) of the light guide element (50) is at a defined distance from the LED board (60) held by the profile element (10).

14. A lighting unit having an arrangement for light emission (100) according to any of the preceding claims.

## Revendications

1. Agencement pour l'émission de lumière (100) comportant un élément de guidage de lumière (50) en forme de plaque ainsi qu'au moins une carte de circuit imprimé à DEL (60) allongée, laquelle est disposée sur un côté longitudinal (52) de l'élément de guidage de lumière (50), dans lequel de la lumière émise par des DEL de la carte de circuit imprimé à DEL (60) est couplée dans l'élément de guidage de lumière (50) et émise par l'intermédiaire d'un côté plat (51) de l'élément de guidage de lumière (50),
et dans lequel l'agencement (100) présente un élément profilé (10) allongé pour le stockage de la carte de circuit imprimé à DEL (60), dans lequel l'élément profilé (10) sert en outre également au stockage d'une zone de bord de l'élément de guidage de lumière (50) et est fixé à celui-ci au moyen d'une force de ressort,
**caractérisé en ce que** la fixation de l'élément profilé (10) à l'élément de guidage de lumière (50) est effectuée à l'aide d'un élément de serrage (80), lequel s'étend de l'élément profilé (10) jusqu'à un côté opposé de l'élément de guidage de lumière (50) et est fixé d'un côté à l'élément profilé (10) ainsi que de l'autre côté à une zone de l'élément de guidage de lumière (50) opposée à l'élément profilé (10).

2. Agencement pour l'émission de lumière selon la revendication 1,
**caractérisé en ce que** l'élément profilé (10) présente des zones d'encliquetage (21) pour l'accrochage de l'élément de serrage (80).

3. Agencement pour l'émission de lumière selon la revendication 2,
**caractérisé en ce que** les zones d'encliquetage (21) sont conçues sous la forme de rainures, dans lequel de préférence plusieurs rainures s'étendant parallèlement les unes aux autres sont présentes.

4. Agencement pour l'émission de lumière selon l'une des revendications 1 à 3,
**caractérisé en ce que**, sur le côté de l'élément de guidage de lumière (50) opposé à l'élément profilé (10), un autre élément profilé (10) est disposé, lequel est de conception identique.

5. Agencement pour l'émission de lumière selon l'une des revendications 1 à 3,
**caractérisé en ce que** l'élément de serrage (80) recouvre l'élément de guidage de lumière (50) sur le côté opposé à l'élément profilé (10), dans lequel de préférence la surface latérale correspondante de l'élément de guidage de lumière (50) est réalisée en miroir.

6. Agencement pour l'émission de lumière selon l'une des revendications 1 à 5,
**caractérisé en ce que** l'élément de serrage (80) présente une zone de support (81) pour une zone de bord de l'élément de guidage de lumière (50) non utilisée pour le couplage de lumière.

7. Agencement pour l'émission de lumière selon la revendication 6,
**caractérisé en ce que** l'élément de serrage (80) recouvre la zone de bord de l'élément de guidage de lumière (50) avec une nervure (82) adjacente à la zone de support (81).

8. Agencement pour l'émission de lumière selon l'une des revendications précédentes,
**caractérisé en ce que** l'élément profilé (10) forme un canal (32) allongé pour la réception de la carte de circuit imprimé à DEL (60).

9. Agencement pour l'émission de lumière selon la revendication 8,
**caractérisé en ce que** le canal (32) est délimité sur un premier côté longitudinal par l'élément profilé (10) et est délimité sur un côté longitudinal opposé au premier côté longitudinal par une pièce profilée (70) pouvant être enfichée dans l'élément profilé (10).

10. Agencement pour l'émission de lumière selon la revendication 9,
**caractérisé en ce que** la pièce profilée est un profilé en plastique, lequel est constitué de préférence de plastique blanc.

11. Agencement pour l'émission de lumière selon la revendication 9 ou 10,
**caractérisé en ce que** l'élément profilé (10) forme un support pour un premier côté plat de l'élément de guidage de lumière (50) et la pièce profilée (70) appuie sur l'élément de guidage de lumière (50) sur le côté plat opposé.

12. Agencement pour l'émission de lumière selon l'une des revendications précédentes,
**caractérisé en ce que** l'élément de guidage de lumière (50), dans un état relié à l'élément profilé (10), recouvre celui-ci sur ses extrémités.

13. Agencement pour l'émission de lumière selon l'une des revendications précédentes,
**caractérisé en ce que** l'élément de guidage de lumière (50) s'appuie avec des zones d'appui (54) sur l'élément profilé (10) de telle sorte qu'une zone de couplage de lumière (55) de l'élément de guidage de lumière (50) présente un écartement défini par rapport à la carte de circuit imprimé à DEL (60) maintenue par l'élément profilé (10).

14. Luminaire comportant un agencement pour l'émission de lumière (100) selon l'une des revendications précédentes.
